# EUROPÄISCHE PATENTSCHRIFT

(11) **EP 1 457 727 B1**
(45) Veröffentlichungstag und Bekanntmachung des Hinweises auf die Patenterteilung: **19.11.2008**
(21) Anmeldenummer: 04005740.8
(22) Anmeldetag: 11.03.2004
(51) Int. Cl.: F16L 41/00, F16L 37/00, F16L 41/08, F16L 25/00, F16L 33/22, E03C 1/04

(54) **Verbindung einer Sanitärarmatur mit einer Leitung**
Connection of a sanitary fitting with a conduit
Connexion d'une armature sanitaire avec un conduit

(30) Priorität: 11.03.2003 DE 10311382
(43) Veröffentlichungstag der Anmeldung: 15.09.2004
(73) Patentinhaber: Hansgrohe AG, 77761 Schiltach (DE)
(72) Erfinder: Ginter, Andreas, 78713 Schramberg-Heiligenbronn (DE)
(74) Vertreter: Patentanwälte Ruff, Wilhelm, Beier, Dauster & Partner

(56) Entgegenhaltungen:
- EP-A- 0 326 292
- EP-A- 0 756 039
- EP-A- 0 825 374
- US-A- 4 687 235

## Beschreibung

Die Erfindung geht aus von einer Verbindungseinrichtung zwischen einer Sanitärarmatur und einer zu der Armatur führenden oder von ihr weg führenden Leitung.

Zur Verbindung von Leitungen mit Sanitärarmaturen sind die unterschiedlichsten Ausbildungen bekannt. Im einfachsten Fall enthält eine Aufnahme für die Leitung ein Gewinde, in das ein am Ende der Leitung angeordneter Schraubnippel eingeschraubt wird.

Ebenfalls bekannt ist eine lösbare Verbindung eines Rohrs mit einem Gehäuse, bei der der Endbereich des Rohrs eine Hülse aufweist, die mehrere radial federnd abgespreizte Zungen aufweist, die in die Gewindegänge eingreifen können. Dadurch ist es möglich, das Rohr in die mit dem Gewinde versehene Aufnahme einzuschieben (EP 519244).

Weiterhin ist es bekannt, Rohre in Aufnahmen einzuschieben und durch einen Keilstift zu sichern (DE 7149179).

Die Verbindung nach dem Oberbegriff des Anspruchs 1 ist aus EP-A-0756039 bekannt. Sie weist einen Nippel auf, der, solange er nicht in den Schlauch eingesteckt ist, eine Schulter mit einem Hinterschnitt bildet. Sobald der Nippel in den Schlauch eingesteckt ist, ist kein Hinterschnitt mehr vorhanden.

Der Erfindung liegt die Aufgabe zu Grunde, eine Verbindungsmöglichkeit zwischen einer Leitung und einer Sanitärarmatur zu schaffen, die möglichst vielseitig für unterschiedliche Anwendungsfälle geeignet ist.

Zur Lösung dieser Aufgabe schlägt die Erfindung eine Verbindung mit den Merkmalen des Anspruchs 1 vor. Weiterbildungen der Erfindung sind Gegenstand von Unteransprüchen.

Der am Ende der Leitung angeordnete Nippel enthält sowohl ein Gewinde als auch eine Schulter und einen Hinterschnitt. Der Nippel kann in eine mit einem Gewinde versehene Aufnahme eingeschraubt werden, wobei die Schulter beispielsweise eine Begrenzung der Einschraubbewegung darstellen kann. Der Nippel kann aber auch in eine Aufnahme eingesteckt werden, die kein Gewinde hat, oder ein zu großes Gewinde, und kann dort durch Angreifen an dem Hinterschnitt festgelegt werden. Dies kann mit Hilfe von Klammern oder dergleichen geschehen.

In Weiterbildung der Erfindung kann vorgesehen sein, dass der Anschlussnippel zwischen dem Gewinde und der Schulter einen Einstich aufweist, der beispielsweise zur Aufnahme einer Dichtung dienen kann. Insbesondere ist der Einstich unmittelbar vor der Schulter angeordnet.

Da bei der Dichtfunktion eines O-Rings dieser nicht zu stark gequetscht werden soll, kann die maximale Einschraubtiefe oder Einstecktiefe beispielsweise durch das freie Ende des Nippels bestimmt werden. Es ist aber ebenfalls möglich und wird von der Erfindung vorgeschlagen, dass zu diesem Zweck eine zweite Schulter vorhanden ist, die in die gleiche Richtung gerichtet ist wie die erste Schulter und einen größeren Durchmesser aufweist. Nun kann die zweite Schulter dazu dienen, die Einsteck- oder Einschraubtiefe zu begrenzen.

Der Hinterschnitt, der zur Festlegung für den Fall verwendet wird, dass kein Gewinde vorhanden ist, kann vorzugsweise zwischen der ersten und zweiten Schulter liegen. Er kann jedoch auch insbesondere hinter der zweiten Schulter angeordnet sein.

Unter dem Begriff vor " und " hinter " ist die Orientierung des Nippels, ausgehend von seinem freien Ende, zu verstehen.

Insbesondere kann in Weiterbildung der Erfindung vorgesehen sein, dass der Hinterschnitt durch die Rückseite eines Flanschs gebildet wird. Dieser Flansch kann in Weiterbildung auch die erste oder zweite Schulter auf seiner anderen Seite aufweisen bzw. bilden.

Es ist aber ebenfalls möglich und wird von Erfindung vorgeschlagen, dass der Hinterschnitt durch eine Nutflanke einer Nut gebildet wird.

Zur Verbindung der Leitung mit der Armatur kann beispielsweise an dem Nippel eine Klammer angeordnet sein, die hinter dem Hinterschnitt angreift und die einen oder mehrere Haken aufweist, mit denen sie in entsprechende Formationen der Armatur eingreift.

Umgekehrt kann auch an der Armatur ein Haken oder mehrere Haken angeordnet sein, die nach dem Einstecken des Nippels in die Aufnahme der Armatur hinter den Hinterschnitt greifen.

Eine weitere Möglichkeit der Sicherung der Verbindung kann darin bestehen, dass an der Armatur ein etwa radial zur Aufnahme verschiebbarer Schieber, eine Klammer oder dergleichen geführt ist, die hinter den Hinterschnitt, vorzugsweise auch in die Nut eingreift. Beim Eingreifen des Schiebers in die Umfangsnut kann diese Einrichtung auch dazu dienen, die Eindringtiefe zu definieren.

Weitere Merkmale, Einzelheiten und Vorzüge der Erfindung ergeben sich aus der folgenden Beschreibung bevorzugter Ausführungsformen der Erfindung, den Patentansprüchen und der Zusammenfassung, deren beider Wortlaut durch Bezugnahme zum Inhalt der Beschreibung gemacht wird, sowie anhand der Zeichnung. Hierbei zeigen:
- Figur 1: schematisch teilweise geschnitten die Verbindung zwischen einer Sanitärarmatur und einem Schlauch;
- Figur 2: eine der Figur 1 entsprechende Darstellung bei einer anderen Armatur;
- Figur 3: eine zweite Ausführungsform einer Verbindung zwischen Schlauchende und Armatur;
- Figur 4: eine dritte Ausführungsform.

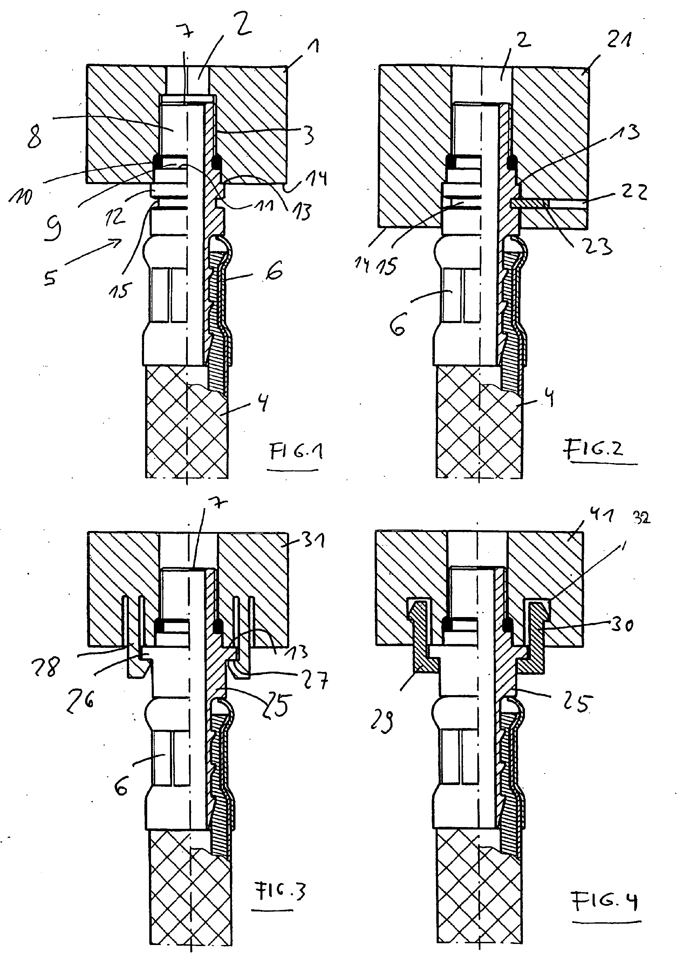

Figur 1 zeigt stark vereinfacht als Beispiel für eine Armatur 1 einen Block mit einer Aufnahme 2, die im Fall der Figur 1 ein Innengewinde 3 aufweist. Mit dieser Armatur 1 soll eine Leitung 4 verbunden werden, die im dargestellten Beispiel ein Schlauch ist. In das Ende des Schlauchs ist ein Anschlussnippel 5 eingesteckt, der dann mit Hilfe einer äußeren Klammer 6 mit diesem Schlauchende verpresst ist. Diese Art der Verbindung zwischen Schlauch und Nippel ist bekannt.

Der Anschlussnippel weist, wenn man von seinem freien Ende 7 ausgeht, hintereinander folgende Elemente auf. Zunächst ist im Bereich des freien Endes ein Außengewinde 8 ausgebildet, das bei der Anordnung der Figur 1 mit dem Innengewinde 3 der Sanitärarmatur 1 in Verbindung steht. An das Außengewinde 8 schließt sich ein Einstich 9 an, der im dargestellten Beispiel zur Aufnahme eines O-Rings 10 dient. Unmittelbar an den Einstich 9 schließt sich eine Schulter 11 an, die einen Außendurchmesser aufweist, der größer ist als der Außendurchmesser des Gewindes 8. Die Schulter wird von einem kurzen zylindrischen Teil des Anschlussnippels gebildet. Daran schließt sich ein Flansch 12 an, der wiederum einen größeren Außendurchmesser als die Schulter 11 aufweist. Dadurch wird eine dem freien Ende 7 des Anschlussnippels 5 zugewandte zweite Schulter 13 gebildet, die an der Außenfläche 14 der Sanitärarmatur 1 anliegt. Diese Schulter 13 begrenzt die Einschraubtiefe des Anschlussnippels 5 in die Sanitärarmatur. Damit wird auch sichergestellt, dass der O-Ring 10 nicht gequetscht wird, so dass er seine Dichtfunktion beibehält.

An den Flansch 12 schließt sich eine Umfangsnut 15 an, die von zwei etwa rechtwinklig zur Längsachse verlaufenden Nutflanken begrenzt ist. Jenseits der Nut 15 weist der Anschlussnippel 5 wieder den gleichen Durchmesser auf wie am Flansch 12.

In Figur 1 ist der Anschlussnippel 5 in die Sanitärarmatur 1 eingeschraubt. Die erste Schulter dient zur Anlage des O-Rings 10, die zweite Schulter 13 zur Definition der Einschraubtiefe. Die Umfangsnut 15 hat hier keine Funktion.

Figur 2 zeigt die Verwendung der gleichen Leitung bei einer anderen Armatur 21. Hier weist die Armatur 21 eine Aufnahme auf, die kein Gewinde enthält. Die Aufnahme 2 ist eine Stufenbohrung mit zwei Stufen. In der Armatur 21 ist in einem Schlitz 22 ein Schieber 23 geführt, dessen Breite etwa der Breite der Umfangsnut 15 entspricht. Bei dieser Art Armatur 21 wird der Anschlussnippel in die Aufnahme eingeschoben, bis die zweite Schulter 13 an einer Schulter der Aufnahme 2 anliegt. In diesem Fall begrenzt die Schulter 13 wiederum die Einstecktiefe, allerdings nicht an der Außenfläche 14 der Armatur 21, sondern in der Aufnahme selbst. Beim Anliegen der Schulter 13 an der Stufe der Aufnahme 2 fluchtet die Umfangsnut 15 mit dem Schlitz 22 des Schiebers 23. Der Schieber 23, der im Querschnitt etwa U-Form aufweisen kann, wird in Richtung auf den Anschlussnippel 5 verschoben und greift längs eines halben Umfangs in die Nut 15 ein. Er sichert auf diese Weise die axiale Position des Anschlussnippels 5 gegenüber der Armatur 21. Bei der hier dargestellten Ausführungsform kann auch der Schieber 23 die Einstecktiefe definieren, allerdings erst nach seinem Einschieben in die Nut 15 des Nippels 5.

Figur 3 zeigt einen etwas anders aufgebauten Anschlussnippel 25, bei dem die Durchmesserverhältnisse etwas geändert sind. Bis zu dem zylindrischen Teil, der auf seiner dem freien Ende 7 zugewandten Seite die erste Schulter 11 bildet, ist der Nippel identisch zu der Ausführungsform nach Figur 1 und 2. An den zylindrischen Teil schließt sich wiederum ein Flansch 26 an, der jetzt aber weiter nach außen vorspringt. Dieser bildet auf seiner dem freien Ende 7 des Anschlussnippels 25 zugewandten Seite die zweite Schulter 13. Auf seiner gegenüberliegenden Seite bildet der Flansch 26 den Hinterschnitt 27. In der Armatur 31 sind mindestens zwei elastischer Haken 28 ausgebildet, die hinter den Flansch 26 schnappen und am Hinterschnitt 27 anliegen.

Bei der Ausführungsform der Figur 4 ist um den Anschlussnippel 25 ein Klammerelement 29 herum gelegt, das längs seines Umfangs zwei oder mehr Haken 30 aufweist, die in ihrer Form etwa den Haken 28 der Ausführungsform nach Figur 3 entsprechen. Die Hakenenden sind aber jetzt nach außen abgewinkelt, während sie bei der Ausführungsform nach Figur 3 nach innen abgewinkelt waren. Die abgewinkelten Enden der Haken 30 greifen in entsprechende Vertiefungen 32 der Armatur 41 ein. Auch hier dient die zweite Schulter 13 zur Definition der Einstecktiefe, um ein Quetschen des O-Rings 10 zu verhindern.

## Patentansprüche

1. Verbindung einer Leitung mit einer Sanitärarmatur (1, 21, 31, 41), mit
einem Anschlussnippel (5, 25) am Ende der Leitung (4),
einem Gewinde (8) im Bereich des freien Endes des Nippels (5, 25),
einer hinter dem Gewinde (8) angeordneten in Richtung auf das freie Ende des Nippels (5, 25) zeigenden Schulter (11), die
einen größeren Außendurchmesser als das Gewinde (8) aufweist,
**gekennzeichnet durch**
einen Hinterschnitt (27) an dem in die Leitung eingesetzten Nippel (5, 25), der
hinter der Schulter (11) angeordnet,
von dem freien Ende (7) des Nippels (5, 25) weg gerichtet und
zum Angriff einer Klammer oder dergleichen ausgebildet ist, wobei die Klammer oder dergleichen den Nippel (5, 25) mit der Armatur (21, 31, 41) verbindet.

2. Verbindung nach Anspruch 1, mit einem Einstich (9) zwischen dem Gewinde (8) und der Schulter (11), vorzugsweise unmittelbar vor der Schulter (11).

3. Verbindung nach Anspruch 1 oder 2, mit einer zweiten gleich gerichteten Schulter (13) größeren Durchmessers hinter der ersten Schulter (11).

4. Verbindung nach Anspruch 3, bei der der Hinterschnitt (27) hinter der zweiten Schulter (13) angeordnet ist.

5. Verbindung nach einem der vorhergehenden Ansprüche, bei der der Hinterschnitt (27) durch die Rückseite eines Flanschs (26) gebildet wird.

6. Verbindung nach einem der vorhergehenden Ansprüche, bei der der Hinterschnitt (27) durch eine Nutflanke einer Nut (15) gebildet wird.

7. Verbindung nach einem der vorhergehenden Ansprüche, mit einer an dem Hinterschnitt (27) angreifenden Klammer zu Verbindung mit der Armatur (41).

8. Verbindung nach Anspruch 7, bei dem die Klammer mindestens zwei in entsprechende Formationen (32) der Armatur (41) eingreifende Haken (30) aufweist.

9. Verbindung nach einem der vorhergehenden Ansprüche, mit einem mit der Armatur (21) zusammenwirkenden hinter den Hinterschnitt bzw. in die Nut (15) eingreifenden Schieberelement (23).

10. Verbindung nach einem der vorhergehenden Ansprüche, mit an der Armatur (31) angeordneten hinter den Hinterschnitt (27) greifenden Haken (28).

## Claims

1. Connection of a line with a plumbing fixture having
a connecting nipple (5, 25) on the end of the line (4),
a thread (8) in the vicinity of the free end of the nipple (5, 25),
a shoulder (11) facing the free end of the nipple (5, 35) that is arranged following the thread (8) and has
a larger outer diameter than the thread (8),
wherein
an undercut (27) on the nipple (5, 25) inserted into the line that is arranged following the shoulder (11)
faces away from the free end (7) of the nipple (5, 25) and is configured for engaging a clip or similar, where the clip or similar joins the nipple (5, 25) to the fixture (21, 31, 41).

2. A connection according to claim 1 having a recess (9) between the thread (8) and the shoulder (11), preferably immediately preceding the shoulder (11).

3. A connection according to claim 1 or claim 2 having a second shoulder (13) facing in the same direction as, and a larger diameter than, the first shoulder (11) following the latter.

4. A connection according to claim 3, wherein the undercut (27) is arranged following the second shoulder (13).

5. A connection according to any of the foregoing claims, wherein the undercut (27) is formed by the underside of a flange (26).

6. A connection according to any of the foregoing claims, wherein the undercut (27) is formed by a flank of a groove (15).

7. A connection according to any of the foregoing claims having a clip that engages the undercut (27) for joining it to the fixture (41).

8. A connection according to claim 7, wherein the clip has at least two hooks (30) that engage associated formations (32) in the fixture (41).

9. A connection according to any of the foregoing claims having a sliding component (23) interacting with the fixture (21) that engages the undercut or slides into the groove (15).

10. A connection according to any of the foregoing claims having hooks (28) arranged on the fixture (31) that engage the undercut (27).

## Revendications

1. Dispositif de raccordement d'une conduite à une robinetterie sanitaire (1, 21, 31, 41), comprenant
un embout de raccordement (5, 25) à l'extrémité de la conduite (4), un filetage (8) dans la partie de l'extrémité libre de l'embout (5, 25), un épaulement (11) disposé derrière le filetage (8) et orienté en direction de l'extrémité libre de l'embout (5, 25), cet épaulement présentant un diamètre extérieur plus grand que le filetage (8),
**caractérisé par**
une contre-dépouille (27) sur l'embout (5, 25) inséré dans la conduite, qui
est disposée derrière l'épaulement (11),
est orientée de manière détournée de l'extrémité libre (7) de l'embout (5, 25) et
est exécutée pour la prise d'une bride de fixation ou similaire, la bride de fixation ou similaire raccordant l'embout (5, 25) à la robinetterie (21, 31, 41).

2. Dispositif de raccordement selon la revendication 1, comprenant une entaille (9) entre le filetage (8) et l'épaulement (11), de préférence directement devant l'épaulement (11).

3. Dispositif de raccordement selon la revendication 1 ou 2, comprenant un second épaulement (13), orienté de manière identique, de diamètre supérieur derrière le premier épaulement (11).

4. Dispositif de raccordement selon la revendication 3, dans lequel la contre-dépouille (27) est disposée derrière le second épaulement (11).

5. Dispositif de raccordement selon l'une quelconque des revendications précédentes, dans lequel la contre-dépouille (27) est formée par le dos d'une bride (26).

6. Dispositif de raccordement selon l'une quelconque des revendications précédentes, dans lequel la contre-dépouille (27) est formée par un flanc de rainure d'une rainure (15).

7. Dispositif de raccordement selon l'une quelconque des revendications précédentes, comprenant une bride de fixation ayant prise sur la contre-dépouille (28) pour le raccordement à la robinetterie (41).

8. Dispositif de raccordement selon la revendication 7, dans lequel la bride de fixation présente au moins deux crochets (30) ayant prise dans des formations correspondantes (32) de la robinetterie (41).

9. Dispositif de raccordement selon l'une quelconque des revendications précédentes, comprenant un élément coulissant (23) agissant avec la robinetterie (21) et ayant prise derrière la contre-dépouille et dans la rainure (15).

10. Dispositif de raccordement selon l'une quelconque des revendications précédentes, comprenant des crochets (28) disposés sur la robinetterie et ayant prise derrière la contre-dépouille (27).
